Europäisches Patentamt

European Patent Office

Office européen des brevets

(11) Publication number : **0 487 460 A1**

# (12) EUROPEAN PATENT APPLICATION

(21) Application number : **91830182.1**

(22) Date of filing : **03.05.91**

(51) Int. Cl.⁵ : **B24B 29/00**

(30) Priority : **20.11.90 IT 2210590**

(43) Date of publication of application :
**27.05.92 Bulletin 92/22**

(84) Designated Contracting States :
**AT CH DE ES FR GB LI SE**

(71) Applicant : **MAPOS ITALIANA S.R.L.**
**Via Fratelli Bandiera, 9/11**
**I-20056 Trezzo Sull'Adda (Milano) (IT)**

(72) Inventor : **Saja, Antonio**
**Via Cappuccini, 14**
**Milano (IT)**

(74) Representative : **Cicogna, Franco**
**Ufficio Internazionale Brevetti Dott.Prof.**
**Franco Cicogna Via Visconti di Modrone, 14/A**
**I-20122 Milano (IT)**

(54) **Apparatus for cleaning and polishing metal pieces.**

(57) An apparatus for cleaning and polishing met-
al pieces comprising a plurality of cleaning
units which are equispaced about a rotary cir-
cular table (2), on which there are mounted
corresponding piece holding assemblies (3),
the cleaning units being driven on four or more
distinct axes, and the piece holder assemblies
(3) being adapted to turn about three or more
axes, the mutual movements of the cleaning
units and the piece holder assemblies (3) and
supporting table therefor being mutually
synchronized by a real-time multi processor
apparatus.

FIG. 1

EP 0 487 460 A1

## BACKGROUND OF THE INVENTION

The present invention relates to a combined apparatus for cleaning and polishing metal pieces in general.

As is known, the surface finishing of metal pieces such a trays, handles, pots, taps and the like is conventionally carried out by rotary brushes which are mounted on the ends of lever arms which can be driven according to requirements.

These rotary brushes, which can also be replaced by other equivalently operating tools, operate, substantially, on pieces which are restrained on suitable supporting structures.

These prior cleaning apparatus, however, even if they comprise a rotary circular table including piece holders thereon, usually include cleaning units which are exclusively provided with manual positioning motions and which, accordingly, can operate exclusively at a single region of the piece to be cleaned.

Accordingly, in these prior apparatus, the surface processing of the piece is performed by using several processing units, each of which is adapted to sequentially clean or polish a different region of the piece.

This operating method, as it should be apparent, is very complex and requires a long time, since the pieces to be cleaned and polished must be subsequently arranged on corresponding piece supporting devices, so as to cause said pieces to present different portions to their related cleaning units.

This requirement, in actual practice, generates great dead times for setting the apparatus, with a consequent impossibility of fully exploiting the potential operating capabilities thereof.

## SUMMARY OF THE INVENTION

Thus, the main object of the present invention is to overcome the above mentioned drawbacks, by providing a combined apparatus for cleaning and polishing metal pieces in general which is adapted to automatically surface finish metal pieces even if they have a rather complex configuration.

Another object of the present invention is to provide a combined apparatus for cleaning and polishing metal pieces in general which affords the possibility of obtaining an even and qualitatively very good finishing of all of the processed pieces.

Yet another object of the present invention is to provide such a combined apparatus for cleaning and polishing metal pieces in general, the operating cycle of which can be easily and quickly fitted to the specific series of pieces to be finished.

According to one aspect of the present invention, the above mentioned objects, as well as yet other objects, which will become more apparent hereinafter, are achieved by a combined apparatus for cleaning and polishing metal pieces in general, characterized in that said apparatus comprises a plurality of cleaning units, equispaced about a rotary circular table, thereon corresponding piece holder assemblies are mounted, said cleaning units being adapted to be driven according to four or more distinct axes, and said piece holder assemblies being adapted to rotate about three or more axes, the mutual movements of said cleaning units, said piece holder assemblies and said table being mutually coordinated and synchronized by a real time multi-processor apparatus.

## BRIEF DESCRIPTION OF THE DRAWINGS

Further characteristics and advantages of the combined apparatus according to the present invention will become more apparent from the following detailed description of a preferred, though not exclusive, embodiment thereof which is illustrated, by way of an indicative but not limitative example, in the figures of the accompanying drawings, where:

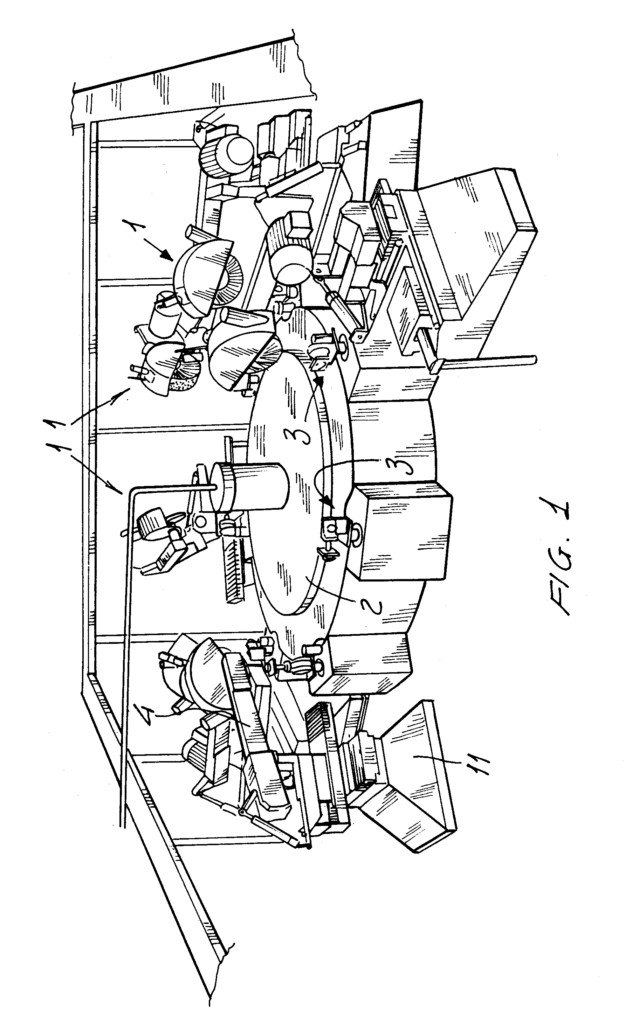

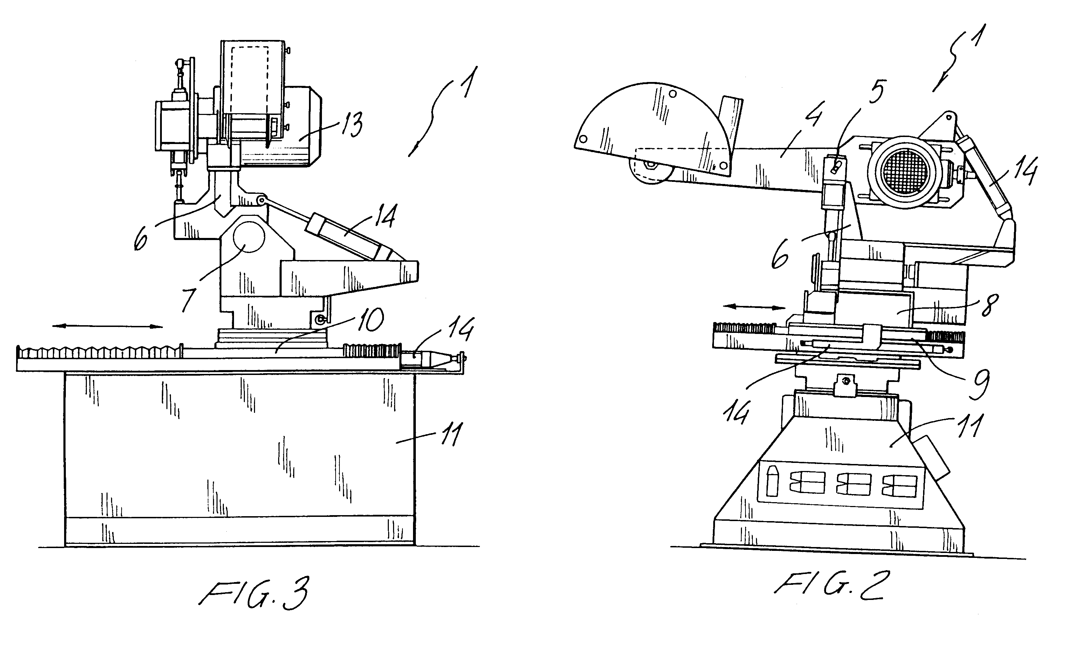

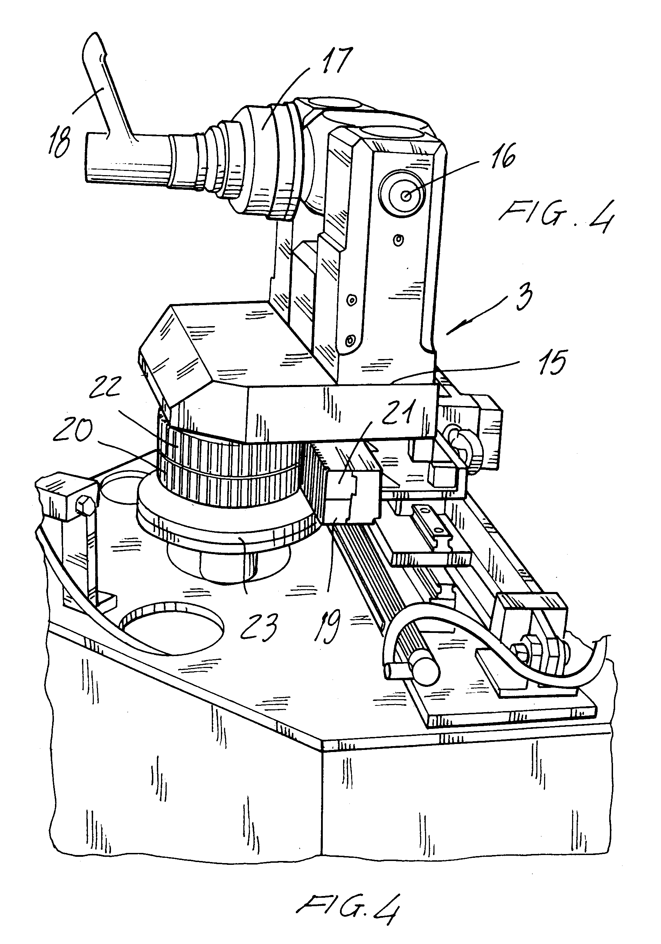

Fig. 1 is a schematic perspective view of the apparatus according to the present inventions;

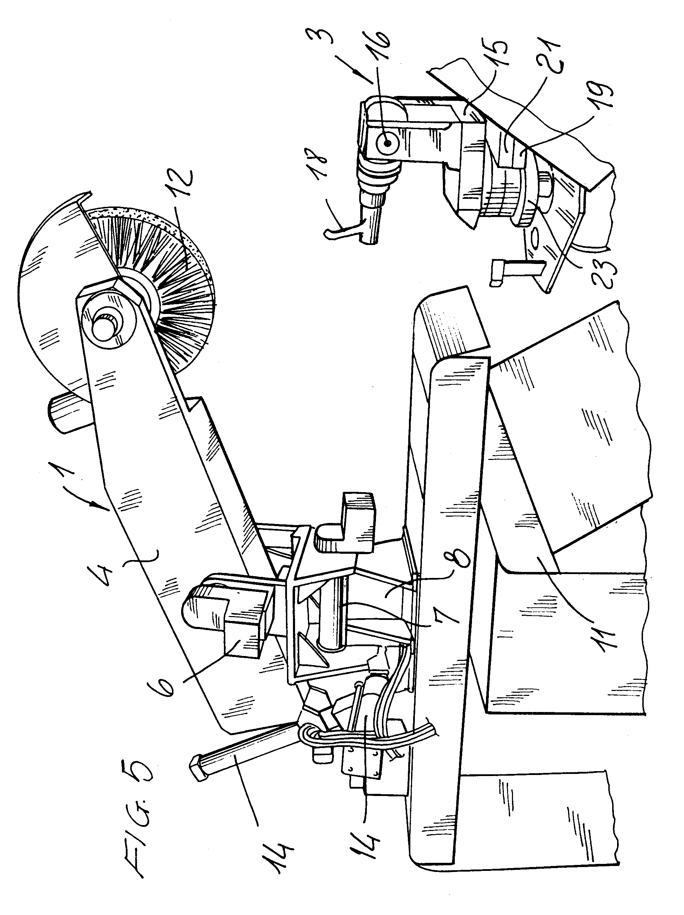

Figures 2 and 3 are respectively a side elevation view and a front elevation view showing one of the cleaning units included in the apparatus according to the present invention;

Figure 4 illustrates a perspective view of one of the piece holder assemblies included in the apparatus according to the present invention; and

Figure 5 illustrates a general view of a cleaning unit and a piece holder assembly.

## DESCRIPTION OF THE PREFERRED EMBODIMENT

With reference to the figures of the accompanying drawings, the combined apparatus for cleaning and polishing metal pieces in general, according to the present invention, essentially comprises a plurality of cleaning units, overally indicated at the reference number 1,which are arranged, at even spacings, about a circular table 2 which can be rotatively driven in a controlled way.

On the circular table 2 there are mounted corresponding piece holder assemblies 3, which are so designed as to properly restrain the metal piece to be finished, during the overall cleaning and polishing cycle provided therefor.

In this connection it should be pointed out that, whereas the piece holder assemblies are evenly spaced on the overall perimetrical extension of the table, the cleaning units are provided in a less number, so as to leave one of the assemblies free for the required replacing of a finished piece with another metal piece to be finished.

The above mentioned cleaning units substantially comprise an arm element 4 which is pivoted, on a pivot axis 5, on a fork structure 6 which is in turn articulated, according to an articulation axis 7, on a suitable supporting element 8.

This supporting element, in particular, is adapted to slide along a plate 9, in parallel with the longitudinal axis of the arm 4.

The plate 9, in turn, can slide, according to an axis perpendicular to the above mentioned axis, along a plate 10, mounted on a supporting base 11.

Said arm 4 supports, at one end portion thereof, a working tool 12, which is turned by an electric motor 13 provided at its opposite end portion.

In operation, the mentioned arm 4 can move, in a horizontal plane, according to two mutually perpendicular directions, and is moreover free of rotating about the pivot axes 5 and 7 under the control of corresponding driving cylinders 14 or other quivalent driving means.

The piece holder assemblies 3 substantially comprise a L-shaped supporting structure 15, including a top fork element thereon there is pivoted, according to a horizontal axis 16, a mandrel 17 which is so designed as to properly restrain a generic metal piece 18 to be finished.

More specifically, this supporting structure can rotate about a vertical axis, under the combined action of a first rack 19 driven by a rack driving cylinder, and a corresponding gear wheel 20, or by other equivalent driving gears.

The mandrel, in turn, can swing about its swinging axis 16 under the control a second rack 21 and a corresponding gear wheel 22, being moreover adapted to rotate on itself by means of suitable bevel gear pairs, driven by a rotary disc 23.

In this connection it should be pointed out that the mutual movements of the cleaning units as well as of the piece holder assemblies and table supporting said assemblies, are mutually coordinated and synchronized by means of a programmed real time multiprocessor apparatus.

In operation, the several programs of the different cleaning cycles are written on a "floppy disk" or the like, and recovered as it is intended to process a given type of tap, handle or the like.

On the cleaning units, in particular, it is possible to mount disks having a different thickness and/or diameter, so that said cleaning units can be used, in the different processing steps, depending on the contour and the contingent requirements of the metal piece to be cleaned.

It should be also apparent that each individual cleaning unit can perform, in association with a piece holder assembly, at will, either partial processing operations or full processing operations on the same piece.

From the above disclosure and the figures of the accompanying drawings it should be apparent that the invention fully achieves the intended objects.

While the invention has heen disclosed and illustrated with reference to a preferred embodiment thereof, it should be apparent that the disclosed embodiment is susceptible to several modifications and variations ail of which will come within the spirit and scope of the appended claims.

## Claims

1. A combined apparatus for cleaning and polishing metal pieces in general, characterized in that said apparatus comprises a plurality of cleaning units, equispaced about a rotary circular table, thereon corresponding piece holder assemblies are mounted, said cleaning units being adapted to be driven according to four or more distinct axes, and said piece holder assemblies being adapted to rotate about three or more axes, the mutual movements of said cleaning units, said piece holder assemblies and said table being mutually coordinated and synchronized by a real time multi-processor apparatus.

2. An apparatus according to Claim 1, wherein said piece holder assemblies are evenly distributed all along the perimeter of said table, said table being adapted to be rotatably driven in a controlled way, and said cleaning units being provided in such a number as to leave free one of said piece holder assemblies, in order to replace a finished piece with another piece to be finished.

3. An apparatus according to Claim 1, wherein said cleaning units comprise a pivoted arm element which is pivoted, according to a transversal axis, on a fork structure which is in turn articulated, according to an axis coplanar to the axis of said arm element, on a supporting element.

4. An apparatus according to Claim 3, wherein said supporting element can slide, parallel to the longitudinal axis of said arm element, along a first plate which, in turn, can slide, according to an axis perpendicular to said longitudinal axis of said arm element, along a second plate mounted on a supporting base.

5. An apparatus according to Claim 3, wherein said arm element supports, at one end portion thereof, a working tool which is rotatively driven by a motor arranged at an opposite end portion of said arm element, said arm element being displaced in a horizontal plane according to two mutually perpendicular directions and being moreover adapted to rotate about perpendicular axes under the control of corresponding driving cylinders.

6. An apparatus according to Claim 1, wherein said piece holder assemblies comprise a L-shaped structure including a top fork element, thereon there is pivoted, on a horizontal axis, a mandrel adapted to restrain a metal piece to be surface finished.

7. An apparatus according to Claim 6, wherein said L-shaped supporting structure can rotate about a vertical axis, under the combined control of a rack, driven by a rack cylinder, and a corresponding gear wheel.

8. An apparatus according to Claim 6, wherein said mandrel can swing about a transversal axis, as controlled by a mandrel rack and corresponding gear whell, said mandrel being moreover adapted to rotate on itself as driven by bevel gear pairs in turn driven by a disk-shaped driving element.

9. An apparatus according to Claim 1, wherein on said cleaning units there are arranged disk elements having a different thickness and/or diameter for allowing said cleaning units to be used depending on a contour of said metal piece, each individual cleaning unit being adapted, in association with a respective piece holder assembly, to perform,at will, either a partial processing operation or a full processing operation on said metal piece.

FIG. 1

FIG. 3

FIG. 2

EP 0 487 460 A1

FIG. 4

FIG. 4

FIG. 5

**European Patent Office**

# EUROPEAN SEARCH REPORT

Application Number

## DOCUMENTS CONSIDERED TO BE RELEVANT

EP 91830182.1

| Category | Citation of document with indication, where appropriate, of relevant passages | Relevant to claim | CLASSIFICATION OF THE APPLICATION (Int. Cl.5) |
|---|---|---|---|
| Y | US - A - 3 177 773<br>(KEHR)<br>* Column 3, lines 57-71 * | 1,2 | B 24 B 29/00 |
| Y | FR - A - 2 505 718<br>(DEA)<br>* Claim 18 * | 1,2 | |
| A | EP - A - 0 366 430<br>(TOKYO)<br>* Claims 1,2 * | 1 | |
| A | DE - A - 3 616 736<br>(SCHLEIF- UND POLIER-<br>MASCHINENBAU)<br>* Column 2, lines 53-58 * | 4 | |
| A | GB - A - 2 188 262<br>(BUCKLEY & TAYLOR) | 6,7,8 | |
| | ---- | | **TECHNICAL FIELDS SEARCHED (Int. Cl.5)**<br><br>B 08 B<br>B 23 Q<br>B 24 B<br>B 25 J |

The present search report has been drawn up for all claims

| Place of search | Date of completion of the search | Examiner |
|---|---|---|
| VIENNA | 18-02-1992 | GLAUNACH |